Europäisches Patentamt

European Patent Office

Office européen des brevets

(11) Veröffentlichungsnummer : **0 013 396**
**B1**

(12) **EUROPÄISCHE PATENTSCHRIFT**

(45) Veröffentlichungstag der Patentschrift :
09.06.82

(51) Int. Cl.³ : **C 03 B  5/42**, C 03 B  9/02,
F 27 D  21/02

(21) Anmeldenummer : 79105280.6

(22) Anmeldetag : 20.12.79

(54) Wärmestrahlungsschutz.

(30) Priorität : 11.01.79 DE 2900856

(43) Veröffentlichungstag der Anmeldung :
23.07.80 (Patentblatt 80/15)

(45) Bekanntmachung des Hinweises auf die Patenterteilung : 09.06.82 Patentblatt 82/23

(84) Benannte Vertragsstaaten :
AT BE FR GB IT SE

(56) Entgegenhaltungen :
DE C 115 636
DE C 148 653
SU A 445 624
US A 1 360 587

(73) Patentinhaber : **Maschinenfabrik Reinhausen Gebrüder Scheubeck GmbH & Co. KG.**
**Falkensteinstrasse 8**
**D-8400 Regensburg (DE)**

(72) Erfinder : **Fend, Fritz M.**
**Thurmayerstrasse 11**
**D-8400 Regensburg (DE)**

Imprimerie Jouve, 18, rue St-Denis, 75001 Paris, France

Wärmestrahlungsschutz

Die Erfindung betrifft einen Wärmestrahlungsschutz für Arbeitsöffnungen von Schmelzöfen, insbesondere von Glasschmelzöfen, mit wenigstens einer vor der Arbeitsöffnung angeordneten und in Rotation versetzbaren Scheibe bzw. Scheibenanordnung, die wenigstens eine Sichtöffnung für den Bedienenden aufweist, welche sich beim Rotieren der Scheibe an der Arbeitsöffnung vorbeibewegt.

Durch die aus Arbeitsöffnungen von Schmelzöfen austretende, in der Regel sehr intensive Wäremstrahlung wird das Arbeiten an derartigen Schmelzöfen sehr erschwert, wobei auch gesundheitliche Schäden dadurch auftreten können, daß das am Schmelzofen arbeitende Personal an einer Körperseite der Wärmestrahlung des Schmelzofens ausgesetzt ist, während die dem Schmelzofen abgewandte Körperseite nur der normalen Raumtemperatur und möglicherweise noch der durch eine unzureichend arbeitende Belüftungsanlage erzeugten Zugluft ausgesetzt ist.

Es wäre nun denkbar, Arbeitsöffnungen von Schmelzöfen zur Verringerung der austretenden Wärmestrahlung mit Klappen oder Türen aus feuerfesten bzw. wärmebeständigem Material zu verschließen. Dies hätte jedoch den Nachteil, daß derartige Klappen oder Türen eine ständige Beobachtung der Schmelze im Schmelzofen nicht zulassen, sondern für diesen Zweck ständig geöffnet und geschlossen werden müßten. Durch die große Helligkeit der Schmelze wäre auch bei geöffneter Klappe oder Tür eine Beobachtung der Schmelze ohne weitere Schutzmittel, wie beispielsweise Schutzbrillen mit gefärbten Gläsern nicht möglich.

Auch Schutzeinrichtungen in Form von gefärbten Gläsern, die vor der Arbeitsöffnung eines Schmelzofens angeordnet werden, führen nicht zu zufriedenstellenden Ergbnissen, da derartige Gläser durch die auftreffende sehr intensive Wärmestrahlung in der Regel sehr rasch zerstört werden.

Aus diesem Grunde wurde bereits ein Wärmestrahlungsschutz vorgeschlagen, bei welchem eine rotierende Scheibe vor der Arbeitsöffnung angeordnet ist, welche wenigstens eine Sichtöffnung, z.B. einen Schlitz, aufweist, die bzw. der sich an der Arbeitsöffnung vorbeibewegt. Durch entsprechende Wahl des Durchmessers der Sichtöffnung in der Scheibe, der Anzahl der in dieser Scheibe vorgesehenen Sichtöffnungen sowie der Drehgeschwindigkeit der Scheibe läßt sich die Reduzierung der aus einer Arbeitsöffnung eines Schmelzofens austretenden Wärmestrahlung optimal einstellen, wobei auch die Helligkeit bzw. der Helligkeitseindruck der durch die Sichtöffnung in der rotierenden Scheibe sowie durch die Arbeitsöffnung im Schmelzofen zu beobachtenden Schmelze so stark reduziert wird, daß eine ständige Beobachtung dieser Schmelze ohne besondere zusätzliche Hilfsmittel, wie beispielsweise Schutzbrillen mit gefärbten Gläsern usw.,

möglich ist.

Ein gewisses Problem besteht bei dem bereits vorgeschlagenen Wärmestrahlungsschutz jedoch darin, daß die rotierende Scheibe einer Erheblichen Wärmestrahlung bzw. Wärmebelastung ausgesetzt ist, so daß insbesondere bei Scheiben mit einem im Vergleich zu den Abmessungen der Arbeitsöffnung kleinen Durchmesser ohne ausreichende Kühlung ein Glühen der aus Metall bestehenden Scheibe auftreten kann.

Aufgabe der vorliegenden Erfindung ist es, den eingangs genannten Wärmestrahlungsschutz zu verbessern, um ihn beständiger gegen die aus der Arbeitsöffnung austretende Wärmestrahlung zu machen. Diese Aufgabe wird erfindungsgemäß dadurch gelöst, daß die Scheibenanordnung aus wenigstens zwei parallel zueinander angeordneten und um eine gemeinsame Achse in Rotation versetzbaren Einzelscheiben besteht, die in Abstand voneinander gehalten und miteinander verbunden sind, wobei der Raum zwischen den Einzelscheiben eine Einlaßöffnung sowie eine Auslaßöffnung für diesen Raum durchströmende Kühlluft besitzt, und daß in jeder Einzelscheibe wenigstens eine Sichtöffnung vorgesehen ist, wobei die Sichtöffnungen beider Einzelscheiben in Blickrichtung des Bedienenden deckungsgleich miteinander sind.

Durch die Ausbildung des Wärmestrahlungsschutzes in dieser Weise wird erreicht, daß Kühlluft zwischen den beiden Einzelscheiben beispielsweise vom Drehpunkt der Einzelscheiben radial nach außen insbesondere auch an der der Arbeitsöffnung benachbart liegenden Einzelscheibe vorbeistreicht, wodurch eine sehr intensive Kühlwirkung erreicht wird.

Bei dem erfindungsgemäßen Wärmestrahlungsschutz ist die aus den beiden Einzelscheiben bestehende Scheibenanordnung vorzugsweise so ausgebildet, daß sie beim Rotieren selbst als Radiallüfter wirkend den Kühlluftstrom durch den Raum zwischen den beiden Einzelscheiben erzeugt. Hierbei befindet sich die Eintrittsöffnung für die Kühlluft im Bereich der Drehachse bzw. im Bereich des Mittelpunktes der Scheibenanordnung, und zwar vorzugsweise an der Arbeitsöffnung des Schmelzofens entfernt liegenden Einzelscheibe, während die Austrittsöffnung im Bereich des Außenumfangs der Scheibenanordnung vorgesehen ist. Die Austrittsöffnung wird in einfachster Weise dadurch gebildet, daß die beiden im Abstand voneinander angeordneten Einzelscheiben am Außenumfang der Scheibenanordnung einen offenen Umfangsschlitz bilden.

Der erfindungsgemäße Wärmestrahlungsschutz kann weiterhin so ausgebildet werden, daß die durch die Eintritts- bzw. Einlaßöffnung eintretende Kühlluft gleichzeitig auch zur Kühlung des die Scheibenanordnung tragenden Lagers und/oder zur Kühlung der die Scheibenanordnung tragenden Welle dient. Zu diesem Zweck ist im mittleren Bereich vorzugsweise der der Arbeitsöffnung entfernt liegenden Einzelscheibe ein rohrförmiger Ansatz vorgesehen, der sich vom Schmelzofen bzw. von der Arbeitsöffnung wegerstreckt und die die Scheibenanordnung tragende Welle und/oder das Lager für diese Welle zumindest jeweils in einem Teilbereich mit Abstand umgibt, wobei dann die Einlaßöffnung von dem der Scheibenanordnung entfernt liegenden Ende des rohrförmigen Ansatzes gebildet wird und die Kühlluft durch diese Einlaßöffnung am Lager bzw. an der Welle entlangströmt und im Anschluß in den Raum zwischen den beiden Einzelscheiben eintritt.

Weitere vorteilhafte Weiterbildungen der Erfindung sind in den Unteransprüchen 6 bis 10 angegeben.

Die Erfindung wird im folgenden anhand der Figuren an einem Ausführungsbeispiel näher erläutert. Es zeigen :

Figur 1 in Ansicht die schematische Darstellung eines Teils eines Glasschmelzofens zusammen mit einer Strahlungsschutzeinrichtung gemäß der Erfindung ;

Figur 2 in gegenüber Figur 1 vergrößerter Darstellung einen Schnitt entlang der Linie I-I der Figur 1 ;

Figur 3 in nochmals vergrößerter Darstellung den Schnitt durch die beiden rotierenden Einzelscheiben im Bereich der Sichtöffnung, bei einer abgewandelten Ausführungsform.

In den Figuren ist eine seitliche Begrenzungswand 1 eines Glasschmelzofens dargestellt, wobei diese Begrenzungswand 1 der einfacheren Darstellung wegen nur teilweise gezeigt ist. Im Inneren des Glasschmelzofens, also auf der hinteren Seite der Begrenzungswand 1, befindet sich das verflüssigte bzw. geschmolzene Glas, welches mit einem geeigneten Werkzeug, z.B. einer Glasbläserpfeife, durch eine Arbeitsöffnung 2 in der Begrenzungswand 1 entnommen werden kann.

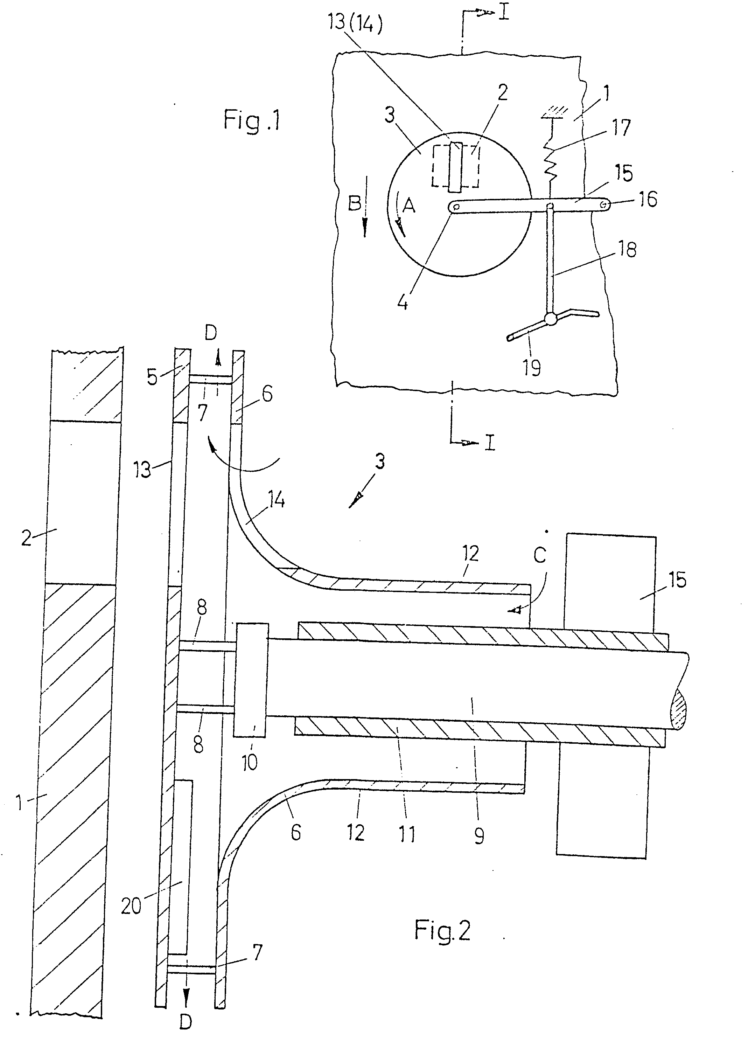

Gemäß Figur 1 befindet sich an der Außenseite der Begrenzungswand 1 bzw. an der Außenseite des Glasschmelzofens vor der Arbeitsöffnung 2 eine runde Scheibenanordnung 3, die um ihre Achse 4 mit einem nicht näher dargestellten Antriebsmotor, z.B. einem Elektromotor, in Richtung des Pfeiles A in Rotation versetzt werden kann.

Die Scheibenanordnung 3 besteht im einzelnen — wie aus Figur 2 ersichtlich — aus einer der Begrenzungswand 1 benachbart liegenden inneren Einzelscheibe 5 und einer der Begrenzungswand 1 entfernt liegenden äußeren Einzelscheibe 6, die parallel zueinander und parallel zur Außenfläche der Begrenzungswand 1 liegen und die gemeinsam um Achse 4 in Rotation versetzt werden können. Die Einzelscheiben 5 und 6 sind durch Bolzen 7 oder durch andere Distanzstücke, die im Umfangsbereich der Einzelscheiben 5 und 6 verteilt angeordnet sind, im Abstand voneinander gehalten. Die Einzelscheibe 5 ist weiterhin im Bereich ihrer Achse 4 über Bolzen 8 mit dem stirnseitigen Ende einer Welle 9 bzw. mit einem an diesem Ende vorgesehenen Flansch 10 verbunden, wobei die Welle 9, die durch einen nicht näher dargestellten Antriebsmotor rotierend angetrieben wird, in einem Lager 11 gelagert ist.

Die Einzelscheibe 6 ist nicht direkt mit der Welle 9 verbunden, sondern besitzt in ihrem mittleren Bereich einen rohrförmigen Ansatz 12, der sich von der der Begrenzungswand 1 abgewandten Oberflächenseite der Einzelscheibe 6 senkrecht von dieser Scheibe wegerstreckt und die Welle 9 sowie das Lager 11 mit Abstand umgibt.

Die Einzelscheiben 5 und 6 bestehen beide aus Stahlblech, wobei für die der Begrenzungswand 1 benachbart liegende Einzelscheibe 5, die der aus der Arbeitsöffnung 2 austretenden Wärmestrahlung unmittelbar ausgesetzt ist, vorzugsweise zunderfreies Blech verwendet wird, während die Einzelscheibe 6 beispielsweise einstückig mit dem rohrförmigen Ansatz 12 aus üblichem Stahlblech durch Verformen gefertigt ist.

In jeder Einzelscheibe 5 bzw. 6 ist jeweils ein sich in radialer Richtung erstreckender Schlitz 13 bzw. 14 vorgesehen, wobei diese Schlitze beispielsweise keilförmig so ausgeführt sind, daß sich die Breite dieser Schlitze mit zunehmendem Abstand von der Welle 9 vergrößert.

Wie die Figur 2 zeigt, ist der Schlitz 13 in der Einzelscheibe 5 deckungsgleich mit dem Schlitz 14 in der Einzelscheibe 6 angeordnet, wobei darüberhinaus beide Schlitze auch gleiche Querschnittsform besitzen. Selbstverständlich ist es möglich, am Umfang der Einzelscheiben 5 und 6 mehrere Paare von sich deckenden Schlitzen 13 und 14 versetzt anzuordnen. Bei einer bevorzugten Ausführungsform der Erfindung sind am Umfang der Einzelscheiben 5 und 6 um 180° versetzt zwei Paare von Schlitzen 13 bzw. 14 vorgesehen.

Bei einem Gesamtdurchmesser der Scheibenanordnung 3 und damit der Einzelscheiben 5 bzw. 6 von etwa 400 mm beträgt die Länge der Schlitze 13 bzw. 14 annähernd 200 mm, d.h. die Schlitze 13 und 14 erstrecken sich nahezu über den gesamten Radius der Scheibenanordnung 3. Die maximale Breite jedes Schlitzes 13 bzw. 14 beträgt etwa 5 mm.

Bei Verwendung von zwei Schlitzpaaren (Schlitze 13 und 14), die sich am Umfang der Scheibenanordnung 3 gegenüberliegen, werden die Welle 9 und damit auch die Einzelscheiben 5 und 6 beispielsweise mit einer Drehgeschwindigkeit von 25 Umdrehungen pro Sekunde angetrieben. Es ist aber auch ohne weiteres möglich, mehrere Schlitzpaare gleichmäßig über den Umfang verteilt vorzusehen, um hierdurch die Drehgeschwindigkeit der Scheibe noch weiter herabzusetzen.

Das Lager 11 und damit auch die Welle 9 und die an dieser Welle befestigte Scheibenanordnung 3 befinden sich an einem Träger, der so ausgestaltet ist, daß die Scheibenanordnung 3 beispielsweise in Richtung des Pfeiles B der Fig. 1 aus der in der Fig. 1 gezeigten Stellung in eine Stellung bewegt werden kann, in der die Arbeitsöffnung 2 nicht mehr durch die Scheibenanordnung abgedeckt und somit zum Einführen des Werkzeuges, z.B. der Glasbläserpfeife, freigegeben ist.

Bei der in den Figuren dargestellten Ausführungsform besteht der Träger aus einem schwenkbaren Hebelarm 15, der an seinem einen Ende das Lager 11 für die Welle 9 sowie den nicht dargestellten Elektromotor trägt. Der Hebelarm 15 ist mit seinem anderen Ende um einen Lagerzapfen 16 schwenkbar, der an der Begrenzungswand 1 oder an einem nicht näher dargestellten ortsfesten Gestell senkrecht zur Außenfläche der Begrenzungswand 1 sitzt.

Um die Scheibenanordnung 3 bzw. den Hebelarm 15 in der in der Fig. 1 dargestellten Ruhestellung zu halten bzw. in diese Ruhestellung zurückzuführen, ist eine Zugfeder 17 vorgesehen, die an ihrem unteren Ende am Hebelarm 15 angreift und mit ihrem oberen Ende an einem ortsfesten Punkt, z.B. an der Begrenzungswand 1 oder aber an dem nicht näher dargestellten ortsfesten Gestell befestigt ist. Durch nicht näher dargestellte Anschläge ist dafür gesorgt, daß der Hebelarm 15 durch die Zugefeder 17 nicht weiter nach oben geschwenkt werden kann, als dies der Ruhestellung dieses Hebelarms entspricht.

Mit Hilfe eines Gestänges 18, das einerseits mit dem Hebelarm 15 und andererseits mit einem Fußpedal 19 verbunden ist, kann der Hebelarm 15 und mit diesem die Scheibenanordnung 3 in Richtung des Pfeiles B um den Drehpunkt 16 nach unten geschwenkt werden, um die Arbeitsöffnung 2 freizugeben.

Es sind selbstverständlich auch andere Mittel denkbar, mit denen die Scheibenanordnung 3 relativ zur Arbeitsöffnung 2 bewegt werden kann, z.B. ist es möglich, zum Schwenken des Hebelarmes 15 hydraulische oder pneumatische Steuermittel zu verwenden und/oder die Scheibenanordnung 3 zusammen mit ihren Antriebsmitteln unter Verwendung einer anderen, nicht von einem Hebelarm 15 gebildeten Führung relativ zur Begrenzungswand 1 des Glasschmelzofens zu bewegen.

Insbesondere bei Verwendung von hydraulischen, pneumatischen oder elektrischen Steuermitteln zum Bewegen der Scheibenanordnung 3 ist es möglich, die entsprechende Steuereinrichtung so auszulegen, daß drei unterschiedliche Stellungen für die Scheibenanordnung möglich sind, und zwar eine erste Stellung in der die Scheibenanordnung 3 die Arbeitsöffnung 2 vollständig abdeckt, wie dies in der Figur 1 dargestellt ist, eine zweite Stellung, in der die Scheibenanordnung 3 nur einen Teil der Arbeitsöffnung 2 abdeckt, sowie eine dritte Stellung, in der die Arbeitsöffnung vollständig von der Scheibenanordnung 3 freigegeben ist.

Die Steuerung kann dabei in der Weise erfolgen, daß beim Einführen eines Werkzeugs (z.B. Glasbläserpfeife) durch die Arbeitsöffnung 2 in den Glasschmelzofen die Scheibenanordnung 3 zunächst aus der die Arbeitsöffnung verschliessenden Stellung gemäß Figur 1 in eine diese Arbeitsöffnung völlig freigebende Stellung bewegt wird und dann mit einer kleinen Verzögerung selbsttätig in eine Stellung zurückkehrt, in der die Arbeitsöffnung 2 nur teilweise durch die Scheibenanordnung 3 abgedeckt wird. Hierdurch ist es möglich, die Glasbläserpfeife bzw. das Werkzeug bei vollständig freigegebener Arbeitsöffnung einzuführen und dieses Werkzeug dann bei teilweise abgedeckter Arbeitsöffnung in dieser Öffnung für einige Zeit zu belassen. Zum Herausnehmen des Werkzeugs bzw. der Glasbläserpfeife aus dem Glasschmelzofen ist dann die Steuerung so getroffen, daß beim erneuten Betätigen eines Betätigungsknopfes oder einer anderen Handhabe die Scheibenanordnung 3 in die die Arbeitsöffnung 2 vollständig freigebende Stellung bewegt wird und dann selbsttätig mit einer etwas größeren Verzögerung in die die Arbeitsöffnung vollständig abdeckende Stellung (Ruhestellung gemäß Fig. 1) zurückkehrt.

Die bei rotierender Scheibenanordnung 3 erzielte Reduzierung der Wärmestrahlung, die aus der Arbeitsöffnung 2 des Glasschmelzofens austritt, ist eine Funktion der Anzahl der Schlitzpaare 13 und 14, der Breite der Schlitze dieser Schlitzpaare sowie der Drehgeschwindigkeit der Scheibenanordnung 3 um die Achse 4. Bei Verwendung von zwei Schlitzpaaren 14 und 13 und der oben bereits genannten Drehgeschwindigkeit von 25 U/sec. für die Scheibenanordnung 3 wird bei einer maximalen Schlitzbreite von 5 mm nicht nur eine wirksame Reduzierung der effektiv aus der Arbeitsöffnung 2 austretenden Wärmestrahlung erreicht, sondern gleichzeitig ist es auch möglich, die Schmelze im Glasschmelzofen durch die Arbeitsöffnung 2 bzw. durch die sich an der Arbeitsöffnung 2 vorbeibewegenden Schlitzpaare (Schlitze 13 und 14) zu beobachten, ohne daß ein Flimmereffekt (Helligkeitsschwankungen) eintritt.

Durch die Ausbildung der Scheibenanordnung in Form von zwei im Abstand voneinander angeordneten Einzelscheiben 5 und 6 wird insbesondere für die innere Einzelscheibe 5 ein sehr guter Kühleffekt erreicht, der dadurch entsteht, daß beim Rotieren der Scheibenanordnung 3 entsprechend dem Pfeil C Kühlluft am offenen Ende des rohrförmigen Ansatzes 12 in den Raum zwischen den beiden Einzelscheiben 5 und 6 eintritt und diesen Raum entsprechend dem Pfeil D am äußeren Rand der Einzelscheiben 5 und 6 in radialer Richtung wieder verläßt. Um einen möglichst effektiven Kühlluftstrom zwischen den beiden Einzelscheiben 5 und 6 zu erreichen, sind im Raum zwischen diesen Einzelscheiben entsprechend einem Radiallüfter mehrere flügelförmige, sich in etwa in radialer Richtung erstreckende Bleche 20 vorgesehen, die entweder an der Einzelscheibe 5 oder aber an der Einzelscheibe 6 in geeigneter Weise befestigt sind.

Die Wärmeübertragung von der Einzelscheibe 5 an die Welle 9 wird dadurch wesentlich reduziert, daß die Einzelscheibe 5 nicht direkt an der Welle 9 befestigt ist, sondern diese Befestigung über die Bolzen 8 erfolgt, die ebenfalls von Kühlluft umströmt werden. Durch die Verwendung des rohrförmigen Ansatzes 12 wird weiterhin erreicht, daß die am offenen Ende dieses rohrförmigen Ansatzes eintretende Kühlluft auch am Lager 11 entlangströmt und dadurch eine Kühlung dieses Lagers bewirkt.

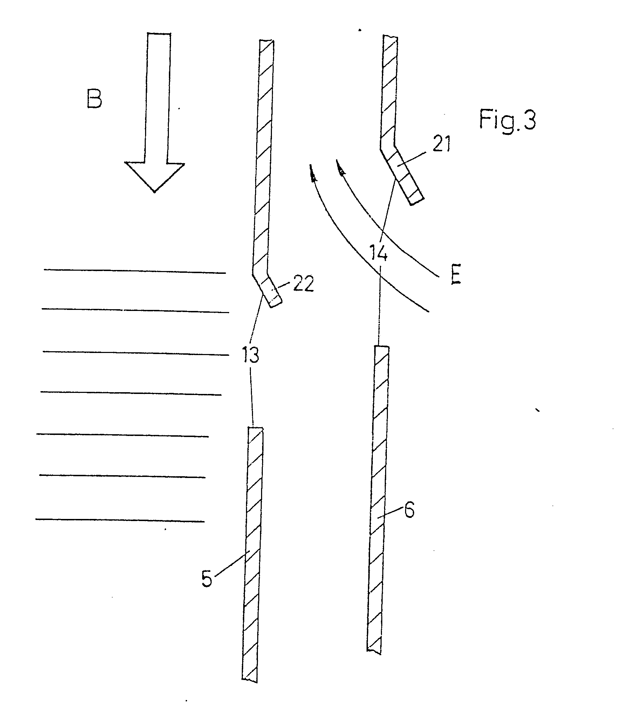

Entsprechend Figur 3 ist es weiterhin möglich, an dem der Welle 9 entfernt liegenden äußeren Rand des Schlitzes 14 einen leicht schräg abgewinkelten Lappen 21 vorzusehen, der über die der Begrenzungswand 1 abgewandte Oberflächenseite der Einzelscheibe 6 derart vorsteht, daß dieser Lappen mit der Fläche des Schlitzes 14 einen spitzen Winkel einschließt. Dieser Lappen wirkt dann beim Rotieren der Scheibenanordnung 3 als Luftfangschaufel, die entsprechend dem Pfeil E zusätzliche Kühlluft durch den Schlitz 14 in den Raum zwischen den beiden Einzelscheiben 5 und 6 fördert.

Eine ähnliche Abwinklung 22, die allerdings in den Raum zwischen den Einzelscheiben 5 und 6 hineinreicht, kann am radial außen liegenden Rand des Schlitzes 13 vorgesehen werden. Diese Abwinklung bzw. dieser Lappen trägt ebenfalls zur Erhöhung des Kühlluftstromes zwischen den Einzelscheiben 5 und 6 bei und bildet gleichzeitig eine Versteifungskante für die Einzelscheibe 5.

Eine Besonderheit besteht bei der in der Fig. 3 dargestellten, abgewandelten Ausführungsform gegenüber der Fig. 2 noch darin, daß die beiden Schlitze 13 und 14 an den Einzelscheiben 5 und 6 in radialer Richtung derart gegeneinander versetzt angeordnet sind, daß der Schlitz 14 von der in der Fig. 3 nicht dargestellten Welle bzw. von der Achse dieser Welle einen größeren radialen Abstand besitzt als der Schlitz 13. Da auch bei dieser Ausführungsform der Dreh- bzw. Mittelpunkt 4 der Scheibenanordnung 3 zumindest bei vor der Arbeitsöffnung 2 befindlicher Scheibenanordnung 3 unterhalb dieser Arbeitsöffnung 2 liegt, ergibt sich die Möglichkeit, schräg von oben her durch die Schlitze 13 und 14 und durch die Arbeitsöffnung 2 hindurch die Glasschmelze im Glasschmelzofen zu beobachten, d.h. die Blickrichtung verläuft bei dieser Ausführungsform nicht senkrecht zu den Oberflächenseiten der Einzelscheiben 5 und 6 — wie dies bei der in der Fig. 2 gezeigten Ausführungsform der Fall ist — sondern schräg zu diesen Oberflächenseiten. Hierdurch ist es dann möglich, die Arbeitsöffnung 2 am Glasschmelzofen bzw. an der Begrenzungswand 1 so anzuordnen, daß sie unterhalb der Kopfhöhe des Bedienungspersonals liegt, wodurch das Einführen und Herausnehmen des Werkzeugs aus der Arbeitsöffnung wesentlich vereinfacht wird und außerdem es nicht erforderlich ist, daß die Bedienungsperson sich zum Beobachten der Glasschmelze nach unten beugen muß. Weiterhin hat diese Ausführungsform den Vorteil, daß die durch die Schlitze aus dem Glasschmelzofen austretende verminderte Wärmestrahlung schräg nach oben in den Raum abgestrahlt wird, wodurch eine zusätzliche Entlastung des Raumes um den Glasschmelzofen von Wärmestrahlung erreicht wird.

Die Erfindung wurde voranstehend an Ausführungsbeispielen beschrieben. Es versteht sich, daß Abwandlungen sowie Änderungen möglich sind, ohne daß dabei der der Erfindung zugrundeliegende Gedanke verlassen wird.

**Ansprüche**

1. Wärmestrahlungsschutz für Arbeitsöffnungen von Schmelzöfen, insbesondere von Glasschmelzöfen, mit wenigstens einer vor der Arbeitsöffnung (2) angeordneten und in Rotation versetzbaren Scheibe bzw. Scheibenanordnung (3), die wenigstens eine Sichtöffnung für den Bedienenden aufweist, welche sich beim Rotieren der Scheibe an der Arbeitsöffnung vorbeibewegt, dadurch gekennzeichnet, daß die Scheibenanordnung aus wenigstens zwei parallel zueinander angeordneten und um eine gemeinsame Achse (4) in Rotation versetzbaren Einzelscheiben (5, 6) besteht, die in Abstand voneinander gehalten und miteinander verbunden sind, wobei der Raum zwischen den Einzelscheiben (5, 6) eine Einlaßöffnung sowie eine Auslaßöffnung für diesen Raum durchströmende Kühlluft besitzt, und daß in jeder Einzelscheibe (5, 6) wenigstens eine Sichtöffnung (13, 14) vorgesehen ist, wobei die Sichtöffnungen (13, 14) beider Einzelscheiben (5, 6) in Blickrichtung des Bedienenden deckungsgleich miteinander sind.

2. Wärmestrahlungsschutz nach Anspruch 1, dadurch gekennzeichnet, daß nur die eine Einzelscheibe, vorzugsweise die der Arbeitsöffnung (2) benachbart liegende Einzelscheibe (5), direkt mit der die Scheibenanordnung (3) in Rotation versetzenden Welle (9) verbunden ist.

3. Wärmestrahlungsschutz nach Anspruch 1 oder 2, dadurch gekennzeichnet, daß sich die Einlaßöffnung für die Kühlluft im mittleren Bereich der Scheibenanordnung (3), vorzugsweise an der der Arbeitsöffnung (2) entfernt liegenden Einzelscheibe (6), befindet und daß sich die Auslaßöffnung für die Kühlluft im Bereich des Umfangs der Scheibenanordnung (3) befindet.

4. Wärmestrahlungsschutz nach Anspruch 3, dadurch gekennzeichnet, daß die Auslaßöffnung für die Kühlluft von einem ringförmigen Schlitz gebildet ist, der seitlich von den Umfangskanten der Einzelscheiben (5, 6) begrenzt ist.

5. Wärmestrahlungsschutz nach einem der Ansprüche 3 oder 4, dadurch gekennzeichnet, daß im mittleren Bereich einer Einzelscheibe, vorzugsweise der der Arbeitsöffnung (2) entfernt liegenden Einzelscheibe (6) ein sich in Richtung der Drehachse von der Scheibenanordnung (3) wegerstreckender rohrförmiger Ansatz (12) vorgesehen ist, der zumindest einen Teil der die Scheibenanordnung tragenden Welle (9) und/oder des diese Welle tragenden Lagers (11) im Abstand umschließt und der der mit seinem der Scheibenanordnung (3) entfernt liegenden Ende zur Umgebung hin offen ist und mit seinem anderen Ende in den Raum zwischen den beiden Einzelscheiben (5, 6) mündet.

6. Wärmestrahlungsschutz nach einem der Ansprüche 1 bis 5, dadurch gekennzeichnet, daß an den Einzelscheiben (5, 6) und/oder im Raum zwischen den Einzelscheiben (5, 6) Flächen, beispielsweise Abwinkelungen (21, 22) und/oder Luftleitflächen (20), vorgesehen sind, die beim Rotieren der Scheibenanordnung (3) den Kühlluftstrom durch den Raum zwischen den Einzelscheiben (5, 6) erzeugen.

7. Wärmestrahlungsschutz nach einem der Ansprüche 1 bis 6, dadurch gekennzeichnet, daß die Sichtöffnungen (13, 14) in den Einzelscheiben (5, 6) jeweils sich in radialer Richtung der Einzelscheiben erstreckende Schlitze sind, sich nahezu über den gesamten Radius der Scheibenanordnung (3) erstrecken, wobei sich jeder Schlitz (13, 14) in Richtung vom Mittelpunkt (4) der Scheibenanordnung zum Rand dieser Scheibenanordnung (3) keilförmig erweitert.

8. Wärmestrahlungsschutz nach einem der Ansprüche 1 bis 7 dadurch gekennzeichnet, daß mehrere Paare von Sichtöffnungen (13, 14) in der Scheibenanordnung (3) vorhanden sind, die im gleichen Abstand um den Mittelpunkt (4) der Scheibenanordnung angeordnet sind.

9. Wärmestrahlungsschutz nach einem der Ansprüche 1 bis 8, dadurch gekennzeichnet, daß die Scheibenanordnung (3) aus einer ersten Stellung, in der die Arbeitsöffnung (2) von der Scheibenanordnung (3) verdeckt ist, in wenigstens eine zweite Stellung bewegbar ist, in der die Arbeitsöffnung (2) vollständig von der Scheibenanordnung (3) freigegeben oder nur teilweise von der Scheibenanordnung (3) verdeckt ist.

10. Wärmestrahlungsschutz nach Anspruch 9, gekennzeichnet durch Führungs- und Steuermittel (15, 18, 19) mit denen die Scheibenanordnung (3) relativ zur Arbeitsöffnung (2) bewegbar ist.

## Claims

1. Heat radiation protection device for working openings of smelting ovens, particularly of glass smelting ovens, with at least one panel or panel arrangement (3) which is arranged in front of the working opening (2), is settable into rotation and which displays at least one viewing opening for the operator, which during the rotation of the panel moves past the working opening, characterised thereby, that the panel arrangement consists of a least two individual panels (5, 6), which are arranged parallelly one to the other, are settable into rotation about a common axis (4), are held at a spacing one from the other and which are connected together, wherein the space between the individual panels (5, 6) possesses an inlet opening as well as an outlet opening for cooling air flowing through this space, and that at least one viewing opening (13, 14) is provided in each individual panel (5, 6) wherein the viewing openings (13, 14) of both individual panels (5, 6) are congruent in viewing direction of the operator.

2. Heat radiation protection device according to claim 1, characterised thereby, that only the one individual panel, preferably the individual panel (5) lying adjacent to the working opening (2), is connected directly with the shaft (9) setting the panel arrangement (3) into rotation.

3. Heat radiation protection device according to claim 1 or 2, characterised thereby, that the inlet opening for the cooling air is disposed in the middle region of the panel arrangement (3), preferably at the individual panel (6) lying remote from the working opening (2), and that the outlet opening for the cooling air is disposed in the region of the periphery of the panel arrangement (3).

4. Heat radiation protection device according to claim 3, characterised thereby, that the outlet opening for the cooling air is formed by an annular slot which is bounded laterally by the peripheral edges of the individual panels (5, 6).

5. Heat radiation protection device according to one of the claims 3 or 4, characterised thereby, that a tubular projection (12) is provided in the middle region of an individual panel, preferably the individual panel (6) lying remote from the working opening (2), extends away in the direction of the rotational axis of the panel arrangement (3), at a spacing encloses at least a part of the shaft (9) carrying the panel arrangement and /or the bearing (11) carrying this shaft, is open to the environment at its end lying remote from the panel arrangement (3) and opens at its other end into the space between both the individual panels (5, 6).

6. Heat radiation protection device according to one of the claims 1 to 5, characterised thereby, that surfaces, for example bent portions (21, 22) and/or air guide surfaces (20), which during rotation of the panel arrangement (3) generate the cooling air stream through the space between the individual panels (5, 6), are provided on the individual panels (5, 6) and/or in the space between the individual panels (5, 6).

7. Heat radiation protection device according to one of the claims 1 to 6, characterised thereby, that the viewing openings (13, 14) in the individual panels (5, 6) are respective slots which extend in radial direction of the individual panels and extend over almost the entire radius of the panel arrangement (3), wherein each slot (13, 14) enlarges in wedge shape in the direction from the centre (4) of the panel arrangement towards the rim of this panel arrangement (3).

8. Heat radiation protection device according to one of the claims 1 to 7, characterised thereby, that several pairs of viewing openings (13, 14) are present in the panel arrangement (3) and arranged at equal spacing around the centre (4) of the panel arrangement.

9. Heat radiation protection device according to one of the claims 1 to 8, characterised thereby, that the panel arrangement (3) is movable out of a first setting, in which the working opening (2) is concealed by the panel arrangement (3), into at least one second setting, in which the working opening (2) is freed completely by the panel arrangement (3) or concealed only partially by the panel arrangement (3).

10. Heat radiation protection device according to claim 9, characterised by guide and control means (15, 18, 19), by which the panel arrangement (3) is movable relative to the working opening (2).

**Revendications**

1. Protection contre le rayonnement thermique pour des ouvertures de service de fours de fusion, notamment de fours de fusion de verre avec au moins un disque ou bien un dispositif de disques (3) placé devant cette ouverture de service (2) et susceptible d'être mis en rotation, et qui comporte au moins un orifice de vision pour les opérateurs, cet orifice se déplaçant devant l'ouverture de service lors de la rotation du disque, protection contre le rayonnement thermique caractérisée en ce que le dispositif de disques est constitué d'au moins deux disques individuels (5, 6) disposés parallèlement l'un à l'autre et susceptibles d'être mis en rotation autour d'un axe commun (4), ces disques étant maintenus à une certaine distance l'un de l'autre et étant reliés ensemble, l'espace entre ces disques individuels (5, 6) étant pourvu d'un orifice d'admission ainsi que d'un orifice d'échappement pour l'air de refroidissement traversant cet espace, tandis que dans chaque disque individuel (5, 6) il est au moins prévu un orifice de vision (13, 14), ces orifices de vision (13, 14) des deux disques individuels (5, 6) se superposant exactement dans la direction du regard de l'opérateur.

2. Protection contre le rayonnement thermique selon la revendication 1, caractérisée en ce que seul l'un des disques individuels, de préférence le disque individuel (5) situé au voisinage de l'ouverture de service (2) est directement relié à l'arbre (9) mettant en rotation le dispositif de disques (3).

3. Protection contre le rayonnement thermique selon l'une quelconque des revendications 1 et 2, caractérisée en ce que l'orifice d'admission pour l'air de refroidissement se trouve dans la zone médiane du dispositif de disques (3), de préférence sur le disque individuel (6) situé le plus loin de l'ouverture de service (2), tandis que l'orifice d'échappement pour l'air de refroidissement se trouve dans la zone de la périphérie du dispositif de disques (3).

4. Protection contre le rayonnement thermique selon la revendication 3, caractérisée en ce que l'orifice d'échappement pour l'air de refroidissement est constitué par une fente annulaire, délimitée latéralement par les bords périphériques des disques individuels (5, 6).

5. Protection contre le rayonnement thermique selon l'une quelconque des revendications 3 et 4, caractérisée en ce que dans la zone médiane d'un disque individuel, de préférence le disque individuel (6) situé le plus loin de l'ouverture de service (2), il est prévu un appendice tubulaire (12) s'étendant dans la direction de l'axe de rotation du dispositif de disques (3), cet appendice entourant à une certaine distance au moins une partie de l'arbre (9) portant le dispositif de disques et/ou du palier (11) portant cet arbre, l'extrémité de cet appendice tubulaire la plus éloignée du dispositif de disques (3) étant ouverte vers l'environnement, tandis que son autre extrémité débouche dans l'espace entre les deux disques individuels (5, 6).

6. Protection contre le rayonnement thermique selon l'une quelconque des revendications 1 à 5, caractérisée en ce que sur les disques individuels (5, 6) et/ou dans l'espace entre ces disques individuels (5, 6) il est prévu des surfaces, par exemple des rabattements angulaires (21, 22) et/ou des surfaces de guidage d'air (20), qui, lors de la rotation du dispositif de disques (3) engendrent le courant d'air de refroidissement à travers l'espace entre les disques individuels (5, 6).

7. Protection contre le rayonnement thermique selon l'une quelconque des revendications 1 à 6, caractérisée en ce que les orifices de vision (13, 14) dans les disques individuels (5, 6) sont des fentes s'étendant en direction radiale des disques individuels, et qui s'étendent presque sur la totalité du rayon du dispositif de disques (3), chacune de ces fentes (13, 14) allant en s'élargissant en forme de coin depuis le centre (4), du dispositif de disques vers le bord de ce dispositif (3).

8. Protection contre le rayonnement thermique selon l'une quelconque des revendications 1 à 7, caractérisée en ce que plusieurs paires d'orifices de vision (13, 14) sont ménagées dans le dispositif de disques (3), ces orifices étant disposés avec le même intervalle autour du centre (4) du dispositif de disques.

9. Protection contre le rayonnement thermique selon l'une quelconque des revendications 1 à 8, caractérisée en ce que le dispositif de disques (3), à partir d'une première position dans laquelle l'ouverture de service (2) est recouverte par le dispositif de disques (3), est susceptible d'être déplacé dans au moins une seconde position dans laquelle l'ouverture de service (2) est complètement libérée par le dispositif de disques (3) ou bien n'est recouverte que partiellement par ce dispositif de disques (3).

10. Protection contre le rayonnement thermique selon la revendication 9, caractérisée en ce qu'il est prévu des moyens de guidage et de commande (15, 18, 19) grâce auxquels le dispositif de disques (3) est susceptible d'être déplacé par rapport à l'ouverture de service (2).

Fig.1

Fig.2

Fig.3